# EUROPEAN PATENT SPECIFICATION

(11) **EP 3 555 485 B1**
(45) Date of publication and mention of the grant of the patent: **19.01.2022**
(21) Application number: 17793831.3
(22) Date of filing: 30.10.2017
(51) Int. Cl.: F16B 5/02, F16B 19/02, H02K 15/16, H02K 7/18, F03D 3/06

(54) **PAIRED ECCENTRIC CAM ADJUSTER**
EINSTELLER FÜR GEPAARTE EXZENTRISCHE NOCKEN
DISPOSITIF DE RÉGLAGE À CAMES EXCENTRIQUES APPARIÉES

(30) Priority: 19.12.2016 US 201662436034 P; 06.01.2017 DK PA201770007
(43) Date of publication of application: 23.10.2019
(73) Proprietor: Vestas Wind Systems A/S, 8200 Aarhus N (DK)
(72) Inventor: MONGEAU, Peter, Center Conway, New Hampshire 01581 (US)
(74) Representative: Vestas Patents Department
(86) International application number: PCT/DK2017/050354
(87) International publication number: WO 2018/113863

(56) References cited:
- DE-A1- 2 257 243
- GB-A- 478 369
- US-A- 2 216 208
- US-A- 3 006 443
- US-A- 3 062 497
- US-A- 4 444 365
- US-A1- 2009 169 324
- US-A1- 2009 297 261

## Description

### FIELD OF THE INVENTION

The present invention relates to a bolted joint of two components in a wind turbine.

### BACKGROUND

Permanent magnet (PM) machines, especially large PM machines (such as generators used in Wind Turbines) can experience large relative deflections, distortions, and or misalignment of components due to their weight under the force of gravity. These deflections and misalignments impart undesirable system effects including unwanted loads and stress in components, resulting in negative impact on assembly, performance, life, and reliability of the machine.

Cam adjuster as such is known from the prior art.

It is an object of the invention to provide an ability to compensate for misalignments due to gravity, tolerances, and other effects both in production and in the field when handling large component in wind turbine generators is new about this invention.

### SUMMARY

Certain aspects of the present disclosure are directed to a wind turbine which is defined in appended claims 1 to 7.

Certain aspects of the present disclosure are directed to a method which is defined in the appended claims 8 to 15.

Many of the attendant features will be more readily appreciated as the same become better understood by reference to the following detailed description considered in connection with the accompanying drawings. The preferred features may be combined as appropriate, as would be apparent to a skilled person, and may be combined with any of the aspects of the invention provided that the combinations are within the scope of the appended claims. .

### BRIEF DESCRIPTION OF THE DRAWINGS

Figure 1 shows an embodiment of a disassembled paired eccentric cam adjuster.
Figure 2 shows an embodiment of an assembled paired eccentric cam adjuster.
Figure 3 shows an eccentric cam in maximum offset positions - up-wards.
Figure 4 shows an example of an eccentric cam with a shear tube inserted.
Figure 4a shows an eccentric cam in maximum offset positions - downwards.
Figure 4b shows an eccentric cam with a flange having a set of parallel sides.
Figure 4c shows an eccentric cam with a flange having a four holes in outer flange for a adjustment.
Figure 5 shows the cams in nominal condition - no relative offset or adjustment.
Figure 6 shows the cams in 30 degrees turn results in 5mm shift.
Figure 7 shows the cams in 70 degrees turn results in 9.397mm shift.
Figure 8 shows the cams in 90 degrees turn results in full range 10mm shift.
Figure 9 shows an example of two structural components in front of each other.
Figure 10 shows an application for a paired eccentric cam with a simple one direction center correction.
Figure 11 shows an application for a paired eccentric cam with an Eccentric Adjust: Correction of internal elastic deformation due to force of gravity on component mass.

### DETAILED DESCRIPTION

The present invention will now be explained in further details.

This invention addresses this issue by implementation of a paired mechanical eccentric cam (or paired sets of cams) used on each side of two mating components which when properly adjusted compensate or correct for the undesired relative movement between the two components, restoring desired alignment conditions. It is important to notice that the two mating components are joint by a plurality of paired mechanical eccentric cams.

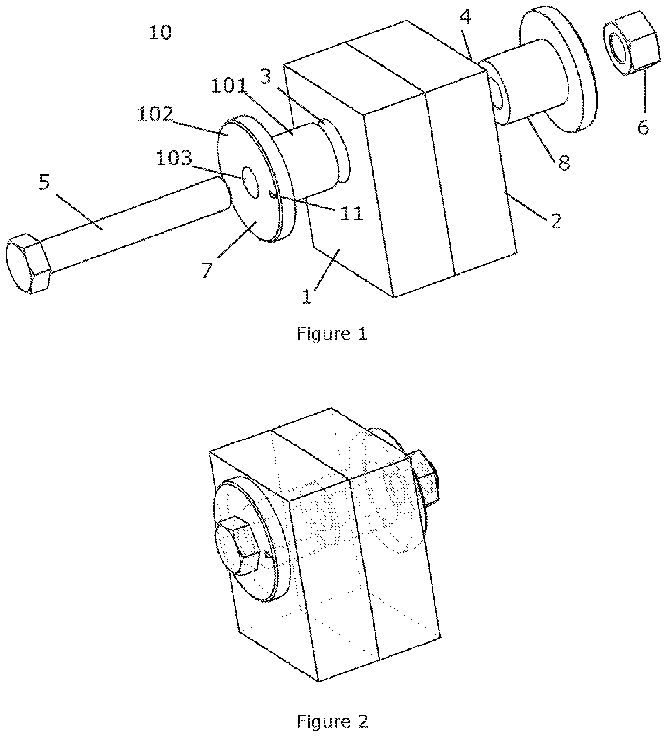

Figure 1 shows an embodiment of a disassembled paired eccentric cam adjuster. Where Figure 2 shows an embodiment of an assembled paired eccentric cam adjuster with the same element as shown in Figure 1.

The paired eccentric cam adjuster comprises a tube with an outer surface and an inner surface, wherein the central longitudinal axis of the outer surface is parallel and offset from the central longitudinal axis of the inner surface. In other word, the Paired eccentric cam adjuster can be considered as sleeve or bushing with an eccentric inner bore.

Further, a flange is arranged at one end of the tube of the paired eccentric cam adjuster. The flange allows adjusting the rotational position of the paired eccentric cam adjuster if being arranged in a hole and provides a stop for the paired eccentric cam adjuster.

Figure 1 shows the paired eccentric cam adjuster used as adjustment means for two components, which are to be connected to each other, but are not properly aligned with respect to each other, each of component 1 and component 2 has a hole 3, 4, respectively. For connection of components 1 and 2, for example, a bolt 5 and a nut 6 are used. Before the inserting of the screw 5, a first eccentric cam adjuster 7 is inserted into the hole 3 and a further eccentric cam adjuster 8 is inserted into the hole 4.

Each of the eccentric cam adjusters 7,8 has a tube 101 with an outer surface and an inner bore 103 and a flange (102) arranged at one end of the tube. The eccentric cam adjuster 7 furthermore has an index pointer 11.

In an embodiment the holes 3 and 4 are aligned with respect to each other, therefore the eccentric cam adjusters 7 and 8 are positioned in a "mirror-image"-like arrangement, where the central longitudinal axes of the outer surfaces coincide and the central longitudinal axes of the inner surfaces coincide.

In another embodiment the holes 3 and 4 are not aligned with respect to each other, at least one of the eccentric cam adjusters 7 and 8 is rotated such that the central longitudinal axes of the inner surfaces still coincide, while central longitudinal axes of the outer surfaces do not coincide.

Since the central longitudinal axes of the inner surfaces coincide in any case, the bolt 5 can be inserted through the hollow inner spaces of the paired eccentric cam adjusters 7 and 8 and the nut 6 can be tightened, whereby the components 1 and 2 are connected with each other.

The sum of the eccentricity of the two eccentric cam adjusters sets the limit for the misalignment which can be compensated by the paired eccentric cam adjusters 7 and 8.

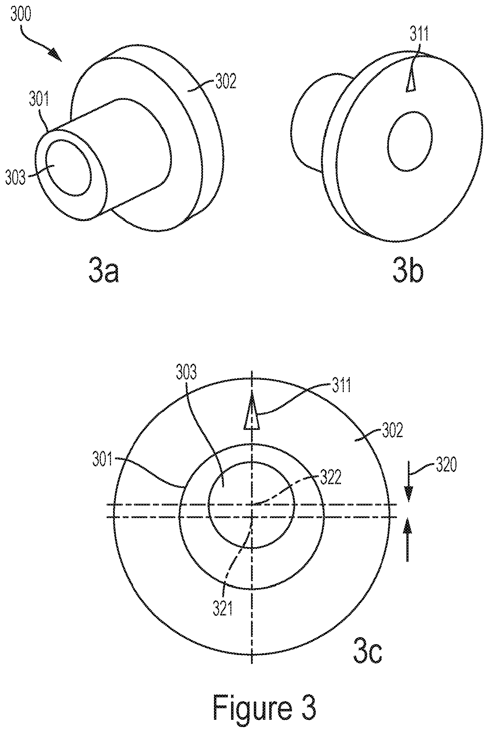

Figure 3 shows an eccentric cam 300 in maximum offset positions 320-up-wards. Figure 3a shows the eccentric cam 300 from the tube end, with the tube 301, where the eccentric inner bore 303 is in its maximum top position as indicated in Figure 3B, which shows the eccentric cam 300 from the flange 302, the index indicator 311 pointing up.

Figure 3c shows a schematic end view of an eccentric cam where the max adjustment range 320 is indicated. The tube 301 or even the flange has a first central longitudinal axis (321) of the outer surface. The inner bore 303 has a second central longitudinal axis (322). The first central longitudinal axis (321) and the second central longitudinal axis (322) are having an offset (320) from each others.

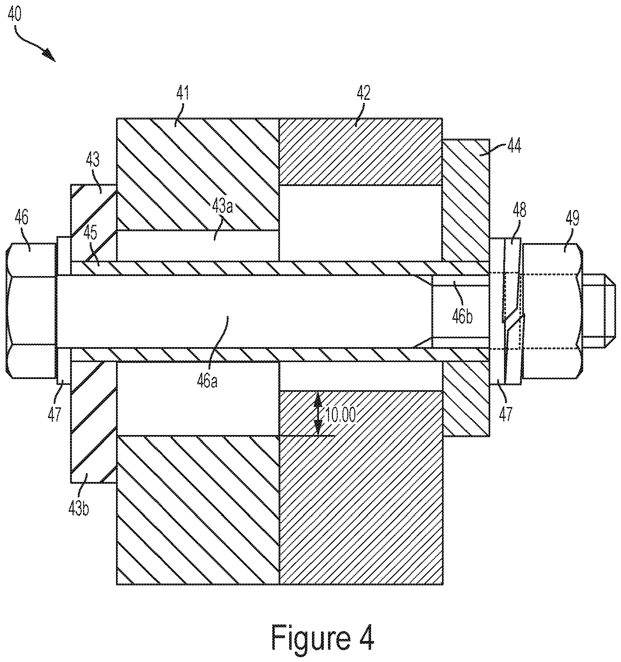

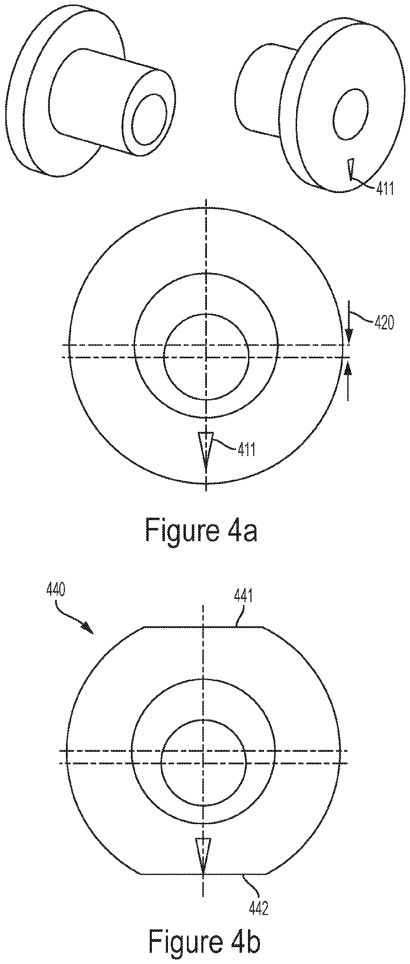

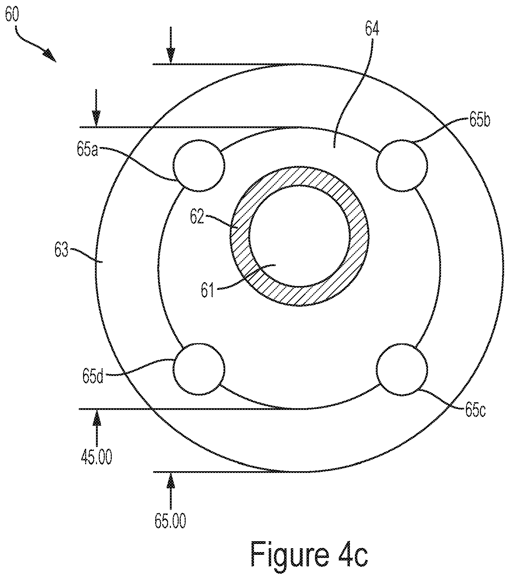

Figure 4 shows an embodiment with eccentric cam adjusters with a shear tube inserted in the inner bore formed when the inner bores of the first cam and the second cam are aligned. In Figure 4 the first cam and the second cam are rotated 180 degrees from each other, illustrating maximum offset range (±5mm).

In detail Figure 4 shows a first flange 41 and a second flange 42, each of the flanges having a hole, in which an adjustable cam is inserted in each flange. The cam adjusters having a tube / bushing part 43a and an outer flange 43b, furthermore the cam adjusters have an eccentric inner bore. Although the holes in the flanges are misaligned, a common path is established through the inner bores of the two cam adjusters, in which a steel shear tube 45 goes through. The steel shear tube 45 provides a high shear force strength in respect of keeping the first and second flanges 41, 42 in place.

An M16 bolt 46 with a washer 47 on the first side is inserted in the steel shear tube 45, on the other side a spring washer 48 is applied and a hex nut 49 ensures the fixation of the paired adjustable cam 43, 44. The bolt 46 is chosen to obtain a minimal slack in the steel shear tube 45, the bolt has a non-threaded part 46a and a threaded part 46b.

In order to ease the insertion of the shear tube, the eccentric inner bore has a dimension which is slightly larger than the outer diameter of the shear tube.

In figure 4, the bolt, which is only used to provide axial pre-load, i.e. moment gravity loads. The joint shear loads (gravity, torque) are managed by the shear tube 45, and the eccentric cam adjusters are rotated to provide tight radial pre-load on flange holes, thereby locking the slack between the inner bores and the shear tube.

In an embodiment all surfaces (except bolt/nut) are lubricated, which facilitates easier disassembly.

In an embodiment, in a wind turbine the paired adjustable cams is used in master fixture to a stator housing mounting flange.

The advantage of this embodiment is that the generator position is not maintained by friction (from axial bolt tension load), but from shear forces of the shear tube.

The advantage of having the shear tube inserted in the two adjusters eccentric cam is that it takes out the clearance in the fastenings holes, and that it provides shear loading instead of frictional loading. The loads on the bolt is decoupled from the shear load, which is now handled by the shear.

The bolt can be designed for clearance without interfering with the shear tube. The bolt is therefore sized "purely" for tension.

Another advantage of having the shear tube is that it makes it much easier for disassembly of the joint tied with the cam adjusters, as the bolt, which goes through the bushing, is no longer stuck by frictional forces, but can glide within the bushing.

The joint flanges are tied by a combination of frictional and shear forces.

In an embodiment two flanges are tied together by a plurality of paired cam adjusters, each pair having a shear tube inserted in the inner bore formed by aligned paired cams.

The materiel of the bushing can be an alloy of metal, such as steel or other known material, used for fasteners.

The material can also be a ceramics with a metal core or other material, which provides an electrical insulation.

The advantages of such an arranged joint with properly adjusted eccentric cams are that not only can the relative position of the two flanges be adjusted, but once so located, this alignment is not dependent on the friction forces between these flanges. The bolting members can now be sized and preloaded for the tensile forces only associated with normal operation.

The internal shear tube, if used, provides an additional degree of functional differentiation where the shear tube can be sized for shear loads, the bolts sized for tensile loads and the eccentric cams properly adjusted for position.

Figure 4a shows an eccentric cam in maximum offset positions - downwards. Figure 4a has the same elements as Figure 3; the two figures differ in the orientation of the index pointers 311 and 411. In Figure 4a the offset position is downward and shown as the distance 420.

In an embodiment the paired eccentric cam adjuster 10 with the first eccentric cam adjuster 7 and/or the second eccentric cam adjuster 8, has the flange (102) with a polygons shape with at least two parallel sides.

Figure 4b shows an embodiment of an eccentric cam adjuster 440 with two parallel sides 441 and 442.

The parallel sides having the function of giving contact surface for a tool for positioning the eccentric cam adjusters according to a requested alignment.

During service it is important to be able adjust the eccentric cam adjusters, it is therefore important that the service team is provided with a way to rotate the eccentric cam adjuster, even if the eccentric cam adjuster is stuck in the component in which it is inserted, due to rust/oxidation or thermal expansion of the materials.

Figure 4c shows an end view of an adjustable cam 60 according to an embodiment, where the central hole 61 is offset 5 mm from true center of the cam 60, a steel shear tube 62 is seen as descripted for Figure 4. The cam 60 has an outer flange 63 and a tube 64. A set of four holes 65a, 65b, 65c, 65d is made in the outer flange 63, which can be used for applying a custom spanner wrench (not shown). The cam 60 has an outer flange 63 diameter of 65mm and a tube 64 diameter of 45mm.

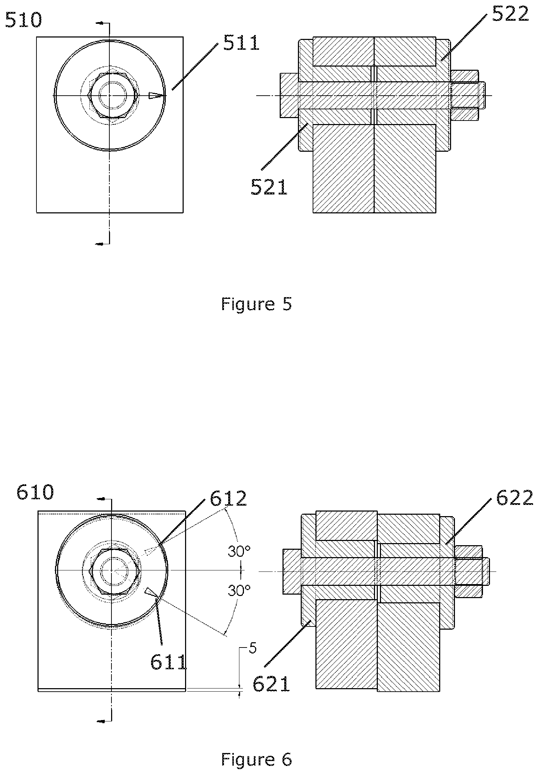

Figure 5 to Figure 8 shows embodiments with paired eccentric cam adjustors showing the range of motion for a 5mm paired eccentric cam.

In Figure 5 the cams are in nominal condition - no relative offset or adjustment. The left part figure 5 shows an end view of the paired eccentric cam 510, whereas the right part of Figure 5 shows a side view. The paired eccentric cam 510 has the index pointers 511, for each of the cams 521, 522 pointing in the same direction, i.e. no offset is obtained.

Figure 6 shows the cams in 30 degree turn which results in a 5mm shift. The left part figure 6 shows an end view of the paired eccentric cam 610, whereas the right part of Figure 6 shows a side view. The paired eccentric cam 610 shows the index pointers 611 612, for each of the cams 621, 622 pointing with an offset of 30 degrees each, i.e. an offset of 5mm is obtained.

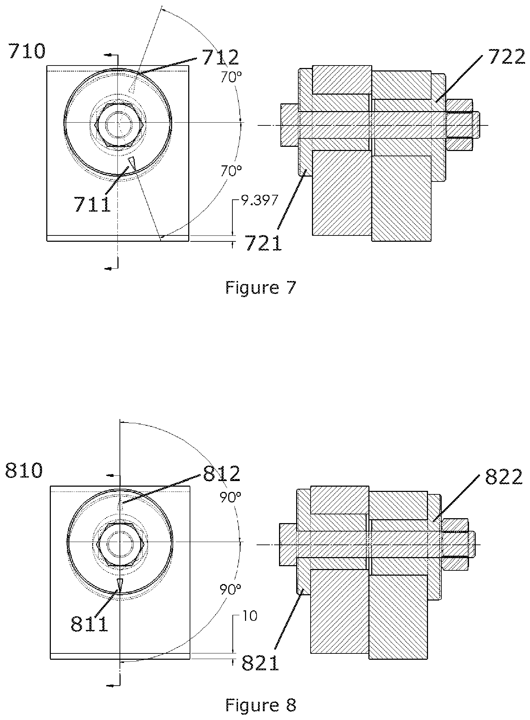

Figure 7 shows the cams in 70 deg turn which results in a 9.397mm shift. The left part figure 7 shows an end view of the paired eccentric cam 710, whereas the right part of Figure 7 shows a side view. The paired eccentric cam 710 shows the index pointers 711 712, for each of the cams 721, 722 pointing with an offset of 70 degrees each, i.e. an offset of 9.397mm is obtained.

Figure 8 shows the cams in 90 deg turn which results in full a range of 10mm shift. The left part figure 8 shows an end view of the paired eccentric cam 810, whereas the right part of Figure 8 shows a side view. The paired eccentric cam 810 shows the index pointers 811 812, for each of the cams 821, 822 pointing with an offset of 90 degrees each, i.e. an offset of 10mm is obtained.

All the offsets shown in the Figures, show a displacement in the Z direction 900. It should be apparent for the skilled person that the displacement provided by the eccentric cam adjusters 7, 8 can be in any directions in the X - Z plane.

Modern large permanent magnet generators and gearboxes are often designed with large diameters, while still having an air gap or tolerances of a few millimeters. The small gap causes any air gap deviations to variate the magnetic field seen in generator stator. It is therefore extremely important that a method for adjusting the air gap or position or shape of large components is available.

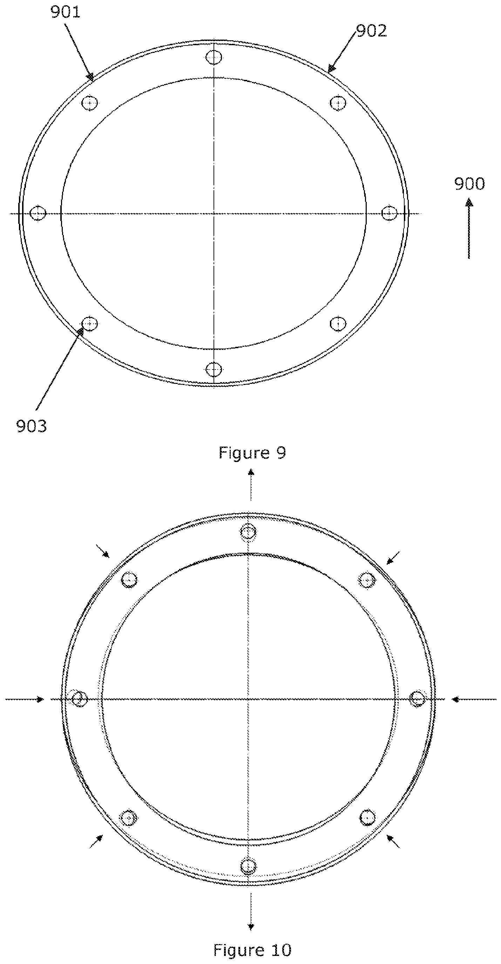

The following examples illustrate several embodiments of how the examples of the invention can be implemented. Figure 9, relates to alignment of a large fixed body 901 (for example a windturbine gearbox) to a mounted large 2nd body 902 (for example a generator), each of the large bodies 901, 902 has a plurality of holes 903 for inserting bolts and nuts. Figure 9 shows an initial condition of aligning two elements, here a Front (Fixed) Plate OD 901 and a Rear Plate OD 902. A plurality of Adjustor Holes 903. As both plates are aligned, all holes and diameters are aligned.

In case there is a requirement for lowering Rear Plate OD 902 by moving plate center 5mm, paired eccentric cams are required. Figure 10 shows in detail this scenario.

Permanent magnet (PM) machines, especially large PM machines, such as generators used in wind turbines, can experience large relative deflections, distortions, and or misalignment of components due to their weight under the force of gravity. These deflections and misalignments impart undesirable system effects including unwanted loads and stress in components, resulting in negative impact on assembly, performance, life, and reliability of the machine.

This issue is addressed by the paired mechanical eccentric cam (or paired sets of cams) used on each side of two mating components which when properly adjusted compensate or correct for the undesired relative movement between the two components, restoring desired alignment conditions.

An advantage of the embodiments when used in relation to an electrical generator is that the paired eccentric cam can be adjusted over the lifetime of the generator.

Furthermore, the precise electrical and mechanical alignment of the two separate rotor and stator assemblies can be adjusted in situ. This greatly factiltates service and repair of said assemblies which may require these parts to be separated and thus lose whatever alignment they originally had.

If one considers the direction of gravity to be in the opposite direction of the Z direction 900 it could be envisioned that a rotor subassembly residing inside a large electrical generator deflects (or sags) in the -Z direction due to gravity. This could cause an undesired misalignment between the stator and the rotor. This misalignment can be corrected or compensated for by proper installation and adjustment of the aforementioned eccentric cams.

In an embodiment a plurality of paired eccentric cam adjusters 10 are used to offset an electrical rotor from the stator of an electrical generator.

For instance in this case, the generator side could be lowered in the -Z direction to match the Z offset of the rotor, thus restoring the desired magnetic air gap thickness. See Figure 10.

In an embodiment a plurality of paired eccentric cam adjusters 10 are used to offset an electrical rotor from the stator of an electrical generator. Where measuring a electromagnetic balance in an electrical machine in the wind turbine, is followed by adjusting at least the first eccentric cam adjuster 7 and at least the second eccentric cam adjuster 8, so to adjust the electromagnetic balance in the electrical machine and to balance unbalanced magetnic pull, or electrical balance in the electrical circuits of the generator.

In Figure 10 the paired eccentric cam adjustors are turned to incur desired shift (one direction) in rear plate. In this example one could consider the rear "plate" to be the mounting rim of the generator and the front plate the gearbox. Inside the generator the large rotor has deflected due to gravity decreasing rotor/stator airgap in -Z. To compensate for this misalignment the generator side is lowered using the eccentric cam adjustors restoring the intended airgap dimension.

Secondly, another example applies in the case of a large, hollow, concentric components (for example the generator housing of a large wind turbine generator). Other application could be gearbox, generator, main shaft, rotor blade hub, etc.

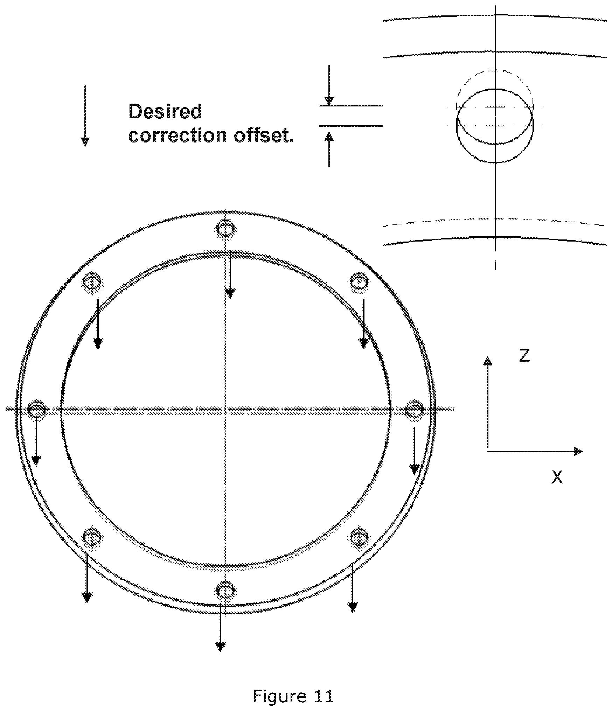

Referring to Figure 11 the intended and designed shape of the component is circular. However as shown in the indicated orientation (operating orientation), the component distorts due to its own weight under the force of gravity into a non-round condition. In this case a set of paired eccentric cams would be implemented between the housing and its mating component (for instance a Gearbox) and properly adjusted in order to correct for this radial distortion, restoring alignment between the rotor and gearbox.

The paired eccentric cam adjuster serves as means of altering or adjusting misalignment and/or relative mechanical position of components in electromagnetic machines (e.g. permanent magnet generators) used in wind turbines with the purpose of correcting or compensating for unwanted deflections, misalignment or distortions in the components or system.

In an embodiment a plurality of paired eccentric cams join the first component (1) and the adjacent second component (2), allowing for adjusting the plurality of paired eccentric cams to correct an radial distortion.

In an embodiment a plurality of paired eccentric cams join the first component (1) and the adjacent second component (2), allowing for adjusting the plurality of paired eccentric cams to correct a gravitational distortion.

Figure 11 shows an example of a distorted (oval shape) generator housing mounted to a stiff round gearbox flange. The eccentric adjustors are inserted into each side of the misaligned holes.

The Eccentric Adjustors are then properly adjusted (turned) to produce the desired corrective alignment at each individual location. Note that each adjustor requires individual adjustment to incur the desired restoration of shape. For example, at the top of the housing a +Z restorative deformation is required. On the right side of the housing a -X restorative deformation is required, etc.

The functional advantage of the embodiments is a highly increased feasibility in construction of large wind turbine components, such as permanent magnet machines, gearboxes etc. Also reduced mechanical stress in the system (for example stress on bearings due to deflected rotor due to gravitational force) and decreased imbalance in the rotational system are an advantages achieved when applying paired eccentric cam adjusters in wind turbine generators. In addition it allows, in the case of generators, for the rotor and stator subassemblies to be aligned in accordance with their electromagnetic centers, thus reducing off-axis forces, or imbalance in multiple generator circuits. It should be noted that such electromagnetic centering is not always coincident with other observable features such as mechanical air-gap.

In general the paired eccentric cam adjuster can be used to connect all structural parts in the wind turbine; this can be the generator, gearbox, base frame, rotor hub, rotor blade, tower segment etc.

An additional functionality that is possible in this approach - i.e. many bolted joint connections are based purely on preloaded friction. Although there is plenty of bolt shear area available for handling torque one are not permitted to account for more than 1-2 bolt shear load sharing (except for large plastic deformation fault cases) because of finite clearances between the bolts and holes. This approach provides a way to take the clearance in the holes and put the bolt into some predetermined state of shear preload, which will allow even more load sharing.

In other words - the paired eccentric cam adjuster acts a bit like the expanding bolts' concepts known from the prior art, and often used for pinned joints, but primarily along one pre-determined off-axis direction. The expanding bolts are actually loaded up in all directions. A clear disadvantage of expanding bolts are that they can be very expensive, and disassembly is difficult.

In an embodiment with an annulus gear / flange joint, the key issue is heat treatment distortion of the gear, leading to a position offset between the bolt hole in the flange and the thread in the annulus gear. This causes bad load sharing between the bolts/pins, and this bad load sharing needs to be compensated by increasing the number of bolts/pins (by 50% or so).

An advantage of this embodiment is that the eccentric cam adjusters will be able to deal with much fewer bolts, and relax manufacturing accuracy at the same time.

As a result of the above mentioned advantages an increased reliability and increased life of the components in the WTG are expected.

In a service aspect of the embodiments it is clear that a potential of adjusting or tuning alignment of components in the field during installation and assembly will provide better alignment of the main components, or even during scheduled service routines, where wear and tear calls for a realignment of main components.

The potential of correcting developed misalignments on-site in the field (for example due to wear or shifting of components) as opposed to needing to service in the factory, is clearly a benefit, as production down time is limited.

Any range or device value given herein may be extended or altered without losing the effect sought, as will be apparent to the skilled person.

It will be understood that the benefits and advantages described above may relate to one embodiment or may relate to several embodiments. It will further be understood that reference to 'an' item refer to one or more of those items.

It will be understood that the above description of a preferred embodiment is given by way of example only and that various modifications may be made by those skilled in the art. The above specification, examples and data provide a complete description of the structure and use of exemplary embodiments of the invention.

## Claims

1. Wind turbine comprising an assembly (10) of a first component (1) and a second component (2), wherein the first and second component are main components of the wind turbine, the assembly comprises,
- a plurality of paired eccentric cam adjusters adapted for a connection of the first component (1) and the second component (2), said first component (1) has at least a first hole (3) and said second component (2) has at least a second hole (4), the paired eccentric cam adjusters (10) comprising,
- a first eccentric cam adjuster (7) and a second eccentric cam adjuster (8) both comprising,
- a tube (101) with an outer surface and an inner bore (103, 303), wherein a first central longitudinal axis (321) of the outer surface having an offset (320) from a second central longitudinal axis (322) of the inner bore (103, 303) and a flange (102) arranged at one end of the tube,
- the first eccentric cam adjuster (7) suitable for being inserted into the first hole (3) and
- the second eccentric cam adjuster (8) suitable for being inserted into the second hole (4), and
- a bolt (5) and a nut (6) suitable for being received in the inner bores (103, 303) to join the paired and aligned eccentric cam adjusters (7 and 8).

2. The wind turbine according to claim 1, wherein said assembly further comprises a shear tube (45) received in the inner bores (103, 303), having a length covering the inner bores of both eccentric cam adjuster, thereby providing shear force strength between the first component (1) and the second component (2).

3. The wind turbine according to claim 1, wherein the first and second component are main components of the wind turbine consisting of a gearbox and a generator.

4. The wind turbine according to any one of claims 1-3, wherein at least one of the first eccentric cam adjuster (7) and the second eccentric cam adjuster (8) has an index (11) to show a direction of the eccentricity of the eccentric cam adjuster (7,8).

5. The wind turbine according to any one of claims 1 to 4, wherein the holes 3 and 4 are aligned with respect to each other, the paired eccentric cam adjusters (7 and 8) are positioned in a "mirror-image"-like arrangement, where the central longitudinal axes of the outer surfaces coincide and the central longitudinal axes of the inner surfaces coincide.

6. The wind turbine according to any one of claims 1 to 5, wherein the first eccentric cam adjuster (7) and/or the second eccentric cam adjuster (8) further comprising,
- the flange (102) having a polygons shape with at least two parallel sides.

7. The wind turbine according to claims 1 to 6, wherein the eccentric cam adjuster parts are made from insulating materials so as to maintain electrical isolation between the first component (1) and the second component (2).

8. Method of connecting a first component (1) and an adjacent second component (2) of a wind turbine with a plurality of paired eccentric cam adjusters, wherein the first and second component are main components of the wind turbine, said paired eccentric cam adjusters (10) comprising, a first eccentric cam adjuster (7) and a second eccentric cam adjuster (8) both comprising, a tube (101) with an outer surface and an inner bore, wherein a first central longitudinal axis (321) of the outer surface having an offset (320) from a second central longitudinal axis (322) of the inner bore and a flange (102) arranged at one end of the tube,
- the method comprises
- inserting the first eccentric cam adjuster (7) into a hole (3) of the first component (1) and
- inserting the second eccentric cam adjuster (8) into a hole (4) of the second component (2) and
- aligning the second central longitudinal axes of the eccentric cam adjusters (7,8) by rotating the first eccentric cam adjuster (7) and the second eccentric cam adjuster (8), and
- inserting a bolt (5) and a nut (6) in the inner bores (303) of the eccentric cam adjusters (7,8),
- tightening the bolt (5) and the nut (6), thereby connecting the first component (1) and the adjacent second component (2) of the wind turbine.

9. The method according to claim 8, wherein said plurality of paired eccentric cam adjusters (10) are restoring alignment between the first component (1) and the adjacent second component (2) of the wind turbine.

10. The method according to claim 8 or 9, wherein the first component (1) and the adjacent second component (2) are two structural parts in the wind turbine.

11. The method according to claims 8 to 9 further comprises,
- compensating a deformation of at least one of the connecting components, by
- rotating at least one of the first eccentric cam adjuster (7) or the second eccentric cam adjuster (8).

12. The method according to claim 8 or 10, wherein said plurality of paired eccentric cams join the first component (1) and the adjacent second component (2), the method further comprises,
- adjusting the plurality of paired eccentric cams to correct a radial distortion.

13. The method according to claim 8 or 10, wherein said plurality of paired eccentric cams join the first component (1) and the adjacent second component (2), the method further comprises,
- adjusting the plurality of paired eccentric cams to correct a gravitational distortion.

14. The method according to claim 8 or 9 wherein the method further comprises
- measuring an air gap in an electrical machine in the wind turbine,
- adjusting at least the first eccentric cam adjuster (7) and at least the second eccentric cam adjuster (8), so to adjust the air gap of the electrical machine.

15. The method according to claim 8 or 9 wherein the method further comprises
- measuring a electromagnetic balance in an electrical machine in the wind turbine,
- adjusting at least the first eccentric cam adjuster (7) and at least the second eccentric cam adjuster (8), so to adjust the electromagnetic balance in the electrical machine.

## Patentansprüche

1. Windkraftanlage, umfassend einen Aufbau (10) einer ersten Komponente (1) und einer zweiten Komponente (2), wobei die erste und die zweite Komponente Hauptkomponenten der Windkraftanlage sind, wobei der Aufbau umfasst,
- eine Vielzahl von paarweisen exzentrischen Nockeneinstellern, die zur Verbindung der ersten Komponente (1) und der zweiten Komponente (2) angepasst sind, wobei die erste Komponente (1) mindestens ein erstes Loch (3) aufweist und die zweite Komponente (2) mindestens ein zweites Loch (4) aufweist, die paarweisen exzentrischen Nockeneinsteller (10) umfassend,
- einen ersten exzentrischen Nockeneinsteller (7) und einen zweiten exzentrischen Nockeneinsteller (8), die beide umfassen,
- ein Rohr (101) mit einer Außenoberfläche und einer Innenbohrung (103, 303), wobei eine erste mittige Längsachse (321) der Außenoberfläche einen Versatz (320) von einer zweiten mittigen Längsachse (322) der Innenbohrung (103, 303) aufweist, und einem Flansch (102), der an einem Ende des Rohres eingerichtet ist,
- wobei der erste exzentrische Nockeneinsteller (7) geeignet ist, in das erste Loch (3) eingesetzt zu werden und
- der zweite exzentrische Nockeneinsteller (8) geeignet ist, in das zweite Loch (4) eingesetzt zu werden, und
- einen Bolzen (5) und eine Mutter (6), die dazu geeignet sind, in den Innenbohrungen (103, 303) aufgenommen zu werden, um die paarweisen und ausgerichteten exzentrischen Nockeneinsteller (7 und 8) zu verbinden.

2. Windkraftanlage nach Anspruch 1, wobei der Aufbau weiter ein Scherrohr (45) umfasst, das in den Innenbohrungen (103, 303) aufgenommen wird, wobei es eine Länge aufweist, die die Innenbohrungen beider exzentrischer Nockeneinsteller abdeckt, wodurch Scherfestigkeit zwischen der ersten Komponente (1) und der zweiten Komponente (2) bereitgestellt wird.

3. Windkraftanlage nach Anspruch 1, wobei die erste und die zweite Komponente Hauptkomponenten der Windkraftanlage sind, bestehend aus einem Getriebe und einem Generator.

4. Windkraftanlage nach einem der Ansprüche 1-3, wobei mindestens einer des ersten exzentrischen Nockeneinstellers (7) und des zweiten exzentrischen Nockeneinstellers (8) einen Hinweis (11) aufweist, um eine Richtung der Exzentrizität des exzentrischen Nockeneinstellers (7,8) zu zeigen.

5. Windkraftanlage nach einem der Ansprüche 1 bis 4, wobei die Löcher 3 und 4 in Bezug aufeinander ausgerichtet sind, die paarweisen exzentrischen Nockeneinsteller (7 und 8) in einer "Spiegelbild"-ähnlichen Anordnung positioniert sind, wo die mittigen Längsachsen der Außenoberflächen zusammenfallen und die mittigen Längsachsen der Innenoberflächen zusammenfallen.

6. Windkraftanlage nach einem der Ansprüche 1 bis 5, wobei der erste exzentrische Nockeneinsteller (7) und/oder der zweite exzentrische Nockeneinsteller (8) weiter umfassen,
- den Flansch (102), der eine Polygonform mit mindestens zwei parallelen Seiten aufweist.

7. Windkraftanlage nach den Ansprüchen 1 bis 6, wobei die exzentrischen Nockeneinstellerteile aus isolierenden Materialien hergestellt sind, um elektrische Isolation zwischen der ersten Komponente (1) und der zweiten Komponente (2) beizubehalten.

8. Verfahren zum Verbinden einer ersten Komponente (1) und einer angrenzenden zweiten Komponente (2) einer Windkraftanlage mit einer Vielzahl von paarweisen exzentrischen Nockeneinstellern, wobei die erste und die zweite Komponente Hauptkomponenten der Windkraftanlage sind, wobei die paarweisen exzentrischen Nockeneinsteller (10) einen ersten exzentrischen Nockeneinsteller (7) und einen zweiten exzentrischen Nockeneinsteller (8) umfassen, die beide ein Rohr (101) mit einer Außenoberfläche und einer Innenbohrung, wobei eine erste mittige Längsachse (321) der Außenoberfläche einen Versatz (320) von einer zweiten mittigen Längsachse (322) der Innenbohrung aufweist, und einen Flansch (102) an einem Ende des Rohres eingerichtet umfassen,
- wobei das Verfahren umfasst
- Einsetzen des ersten exzentrischen Nockeneinstellers (7) in ein Loch (3) der ersten Komponente (1) und
- Einsetzen des zweiten exzentrischen Nockeneinstellers (8) in ein Loch (4) der zweiten Komponente (2) und
- Ausrichten der zweiten mittigen Längsachsen der exzentrischen Nockeneinsteller (7,8) durch Drehen des ersten exzentrischen Nockeneinstellers (7) und des zweiten exzentrischen Nockeneinstellers (8), und
- Einsetzen eines Bolzens (5) und einer Mutter (6) in die Innenbohrungen (303) der exzentrischen Nockeneinsteller (7,8),
- Festziehen des Bolzens (5) und der Mutter (6), wodurch die erste Komponente (1) und die angrenzende zweite Komponente (2) der Windkraftanlage verbunden werden.

9. Verfahren nach Anspruch 8, wobei die Vielzahl von paarweisen exzentrischen Nockeneinstellern (10) Ausrichtung zwischen der ersten Komponente (1) und der angrenzenden zweiten Komponente (2) der Windkraftanlage wiederherstellen.

10. Verfahren nach Anspruch 8 oder 9, wobei die erste Komponente (1) und die angrenzende zweite Komponente (2) zwei strukturelle Teile der Windkraftanlage sind.

11. Verfahren nach den Ansprüchen 8 bis 9 weiter umfassend,
- Ausgleichen einer Verformung von mindestens einer der Verbindungskomponenten, durch
- Drehen mindestens eines des ersten exzentrischen Nockeneinstellers (7) oder des zweiten exzentrischen Nockeneinstellers (8).

12. Verfahren nach Anspruch 8 oder 10, wobei die Vielzahl von paarweisen exzentrischen Nocken die erste Komponente (1) und die angrenzende zweite Komponente (2) verbindet, wobei das Verfahren weiter umfasst,
- Einstellen der Vielzahl von paarweisen exzentrischen Nocken, um eine radiale Verzerrung zu korrigieren.

13. Verfahren nach Anspruch 8 oder 10, wobei die Vielzahl von paarweisen exzentrischen Nocken die erste Komponente (1) und die angrenzende zweite Komponente (2) verbindet, wobei das Verfahren weiter umfasst,
- Einstellen der Vielzahl von paarweisen exzentrischen Nocken, um eine Gravitationsverzerrung zu korrigieren.

14. Verfahren nach Anspruch 8 oder 9, wobei das Verfahren weiter umfasst
- Messen eines Luftspalts in einer elektrischen Maschine in der Windkraftanlage,
- Einstellen mindestens des ersten exzentrischen Nockeneinstellers (7) und mindestens des zweiten exzentrischen Nockeneinstellers (8), um den Luftspalt der elektrischen Maschine einzustellen.

15. Verfahren nach Anspruch 8 oder 9, wobei das Verfahren weiter umfasst
- Messen eines elektromagnetischen Gleichgewichts in einer elektrischen Maschine in der Windkraftanlage,
- Einstellen mindestens des ersten exzentrischen Nockeneinstellers (7) und mindestens des zweiten exzentrischen Nockeneinstellers (8), um das elektromagnetische Gleichgewicht in der elektrischen Maschine einzustellen.

## Revendications

1. Éolienne comprenant un ensemble (10) d'un premier composant (1) et d'un second composant (2), dans laquelle le premier et le second composant sont des composants principaux de l'éolienne, l'ensemble comprenant,
- une pluralité de dispositifs de réglage à cames excentriques appariées conçus pour connecter le premier composant (1) et le second composant (2), ledit premier composant (1) ayant au moins un premier trou (3) et ledit second composant (2) ayant au moins un second trou (4), les dispositifs de réglage à cames excentriques appariées (10) comprenant,
- un premier dispositif de réglage à cames excentriques (7) et un second dispositif de réglage à cames excentriques (8), les deux comprenant,
- un tube (101) avec une surface externe et un alésage interne (103, 303), dans laquelle un premier axe longitudinal central (321) de la surface externe a un décalage (320) par rapport à un second axe longitudinal central (322) de l'alésage interne (103, 303) et une bride (102) agencée à une extrémité du tube,
- le premier dispositif de réglage à cames excentriques (7) conçu pour être inséré dans le premier trou (3) et
- le second dispositif de réglage à cames excentriques (8) conçu pour être inséré dans le second trou (4), et
- un boulon (5) et un écrou (6) conçus pour être reçus dans les alésages internes (103, 303) pour joindre les dispositifs de réglages à cames excentriques appariées et alignées (7 et 8).

2. Éolienne selon la revendication 1, dans laquelle ledit ensemble comprend en outre un tube de cisaillement (45) reçu dans les alésages internes (103, 303), ayant une longueur couvrant les alésages internes des deux dispositifs de réglage à cames excentriques, fournissant ainsi une force de cisaillement entre le premier composant (1) et le second composant (2).

3. Éolienne selon la revendication 1, dans laquelle les premier et second composants sont des composants principaux de l'éolienne constitués d'une boîte d'engrenages et d'un générateur.

4. Éolienne selon l'une quelconque des revendications 1-3, dans laquelle au moins l'un du premier dispositif de réglage à cames excentriques (7) et du second dispositif de réglage à cames excentriques (8) a un indicateur (11) pour indiquer une direction de l'excentricité du dispositif de réglage à cames excentriques (7,8).

5. Éolienne selon l'une quelconque des revendications 1 à 4, dans laquelle les trous 3 et 4 sont alignés l'un par rapport à l'autre, les dispositifs de réglage à cames excentriques appariées (7 et 8) sont positionnés selon un agencement de type « image miroir », dans lequel les axes longitudinaux centraux des surfaces externes coïncident et les axes longitudinaux centraux des surfaces internes coïncident.

6. Éolienne selon l'une quelconque des revendications 1 à 5, dans laquelle le premier dispositif de réglage à cames excentriques (7) et/ou le second dispositif de réglage à cames excentriques (8) comprennent en outre,
- la bride (102) ayant une forme de polygone avec au moins deux côtés parallèles.

7. Éolienne selon les revendications 1 à 6, dans laquelle les parties dispositif de réglage à cames excentriques sont constituées de matériaux isolants de façon à maintenir l'isolation électrique entre le premier composant (1) et le second composant (2).

8. Procédé de connexion d'un premier composant (1) et d'un second composant adjacent (2) d'une éolienne avec une pluralité de dispositifs de réglage à cames excentriques appariées, dans lequel les premier et second composants sont des composants principaux de l'éolienne, lesdits dispositifs de réglage à cames excentriques appariées (10) comprennent un premier dispositif de réglage à cames excentriques (7) et un second dispositif de réglage à cames excentriques (8) comprenant tous les deux un tube (101) avec une surface externe et un alésage interne, dans lequel un premier axe longitudinal central (321) de la surface externe a un décalage (320) par rapport au second axe longitudinal central (322) de l'alésage interne et une bride (102) agencée à une extrémité du tube,
- le procédé comprenant
- l'insertion du premier dispositif de réglage à cames excentriques (7) dans un trou (3) du premier composant (1) et
- l'insertion du second dispositif de réglage à cames excentriques (8) dans un trou (4) du second composant (2) et
- l'alignement des seconds axes longitudinaux centraux des dispositifs de réglage à cames excentriques (7,8) en faisant pivoter le premier dispositif de réglage à cames excentriques (7) et le second dispositif à cames excentriques (8), et
- l'insertion d'un boulon (5) et d'un écrou (6) dans les alésages internes (303) des dispositifs de réglage à cames excentriques (7,8),
- le serrage du boulon (5) et de l'écrou (6), connectant ainsi le premier composant (1) et le second composant adjacent (2) de l'éolienne.

9. Procédé selon la revendication 8, dans lequel ladite pluralité de dispositifs de réglage à cames excentriques appariées (10) rétablissent l'alignement entre le premier composant (1) et le second composant adjacent (2) de l'éolienne.

10. Procédé selon la revendication 8 ou 9, dans lequel le premier composant (1) et le second composant adjacent (2) sont deux parties structurelles dans l'éolienne.

11. Procédé selon les revendications 8 à 9 comprenant en outre,
- la compensation d'une déformation d'au moins un des composants de connexion, en
- faisant pivoter au moins un du premier dispositif de réglage à cames excentriques (7) ou du second dispositif de réglage à cames excentriques (8).

12. Procédé selon la revendication 8 ou 10, dans lequel ladite pluralité de cames excentriques appariées joignent le premier composant (1) et le second composant adjacent (2), le procédé comprenant en outre,
- l'ajustement de la pluralité de cames excentriques appariées pour corriger une distorsion radiale.

13. Procédé selon la revendication 8 ou 10, dans lequel ladite pluralité de cames excentriques appariées joignent le premier composant (1) et le second composant adjacent (2), le procédé comprenant en outre,
- l'ajustement de la pluralité de cames excentriques appariées pour corriger une distorsion gravitationnelle.

14. Procédé selon la revendication 8 ou 9, dans lequel le procédé comprend en outre
- la mesure d'un entrefer dans une machine électrique de l'éolienne,
- l'ajustement au moins du premier dispositif de réglage à cames excentriques (7) et au moins du second dispositif de réglage à cames excentriques (8), de façon à ajuster l'entrefer de la machine électrique.

15. Procédé selon la revendication 8 ou 9, dans lequel le procédé comprend en outre
- la mesure d'un équilibre électromagnétique dans une machine électrique de l'éolienne,
- l'ajustement au moins du premier dispositif de réglage à cames excentriques (7) et au moins du second dispositif de réglage à cames excentriques (8), de façon à ajuster l'équilibre électromagnétique dans la machine électrique.
